# EUROPEAN PATENT SPECIFICATION

(11) **EP 3 150 811 B1**
(45) Date of publication and mention of the grant of the patent: **17.04.2019**
(21) Application number: 16191621.8
(22) Date of filing: 29.09.2016
(51) Int. Cl.: F01M 1/02, F01P 3/08, F01M 1/08, F01M 1/16, F01M 5/00, F01M 9/10, F01M 11/03, F02D 13/00, F02D 13/02

(54) **LUBRICATING AND COOLING OIL CIRCUIT FOR AN INTERNAL COMBUSTION ENGINE**
SCHMIER- UND ÖLKÜHLKREISLAUF FÜR EINEN VERBRENNUNGSMOTOR
CIRCUIT DE LUBRIFICATION ET DE REFROIDISSEMENT D'HUILE POUR UN MOTEUR À COMBUSTION INTERNE

(30) Priority: 29.09.2015 IT UB20153993
(43) Date of publication of application: 05.04.2017
(73) Proprietor: FPT Motorenforschung AG, 9320 Arbon (CH)
(72) Inventor: BORG, Jonathan, 9008 St. Gallen (CH); GSTREIN, Wolfgang, 6900 Bregenz (AT)
(74) Representative: Franzolin, Luigi

(56) References cited:
- WO-A1-2014/156012
- GB-A- 2 198 474
- JP-A- 2010 001 750
- US-A- 3 065 743
- US-A1- 2005 061 289

## Description

### Field of the invention

The present invention relates to the field of the lubricating and cooling oil circuits for internal combustion engines.

### Description of the prior art

The engine oil circuit has two different tasks to cool certain components such as the engine pistons, to lubricate other components, such as the bearings, to lubricate and cool other components, such as the turbochargers bearings and to operate further components such as the switching means of the command means of the cylinder valves in order to switch the cylinder valves operation between a normal and at least one auxiliary operation mode.

The most known auxiliary modes are the engine brake mode, or the internal EGR mode, wherein the engine is fired but a quantity of exhaust gas is retained within the cylinders instead to be expelled from them.

Such switching means operate thanks to the pressurized oil of the lubricating and cooling oil circuit of the combustion engine.

WO2012176736 discloses a variable oil pump and a control system capable to control the variable oil pump in order to increase the oil pressure when necessary included the engine brake mode.

However, the variable oil pumps are expensive and not robust as much as a fixed pump, thus, often a fixed oil pump is preferred.

According to another solution disclosed in JPH0417708 a fixed oil pump is coupled with bypass means in order to drain the power strictly necessary from the combustion engine.

However, in both the situations, the oil pump capacity have to be sized for facing the worst condition in which the cylinder valves switching means are activated at full load. JP2010001750 discloses a control device capable to stop the driving of the variable valve train when the request of changeover of the valve operating state to the valve stop mechanism and the request of change of the valve characteristics to the variable valve train are made simultaneously. WO 2014/156012 and US 2005/0061289 disclose further examples of lubricating devices comprising strategies for ensuring proper pressure.

### Summary of the invention

The main object of the present invention to provide a lubricating and cooling oil circuit for an internal combustion engine capable to implement an oil pump of reduced capacity without compromising the performance of the switching means of the cylinder valve command even at full load.

The present invention could represent also an alternative solution with respect to known ones.

The main principle of the invention is to increase throttling or even interrupt the connection between at least one piston oil nozzle and the rest of the lubricating and cooling oil circuit in order to increase the oil pressure within the main gallery of the lubricating and cooling oil circuit when the switching means are activated. In other words, when the driver or the engine control unit of the combustion engine activates/deactivates respectively the engine brake and/or the internal EGR, the switching means command a variation of the cylinder valve behavior, namely the rising/lowering angle, thus the oil pressure within the lubricating and cooling oil circuit is suddenly increased by throttling or shutting off the connection between the main gallery of the lubricating and cooling oil circuit and the nozzle producing the oil jet intended to cool the engine pistons.

According to a preferred embodiment of the invention, the oil flow is interrupted or reduced towards the piston oil nozzles for a short interval strictly necessary to operate said command valve variation. Preferably, such interval have a duration between 0.3 to 1 second and preferably is function of the engine load condition just before the activation/deactivation of at least one auxiliary mode. Examples of switching means for activating auxiliary modes are given in US4615307 or in US2014090616.

These and further objects are achieved by means of the attached claims, which describe preferred embodiments of the invention, forming an integral part of the present description.

### Brief description of the drawings

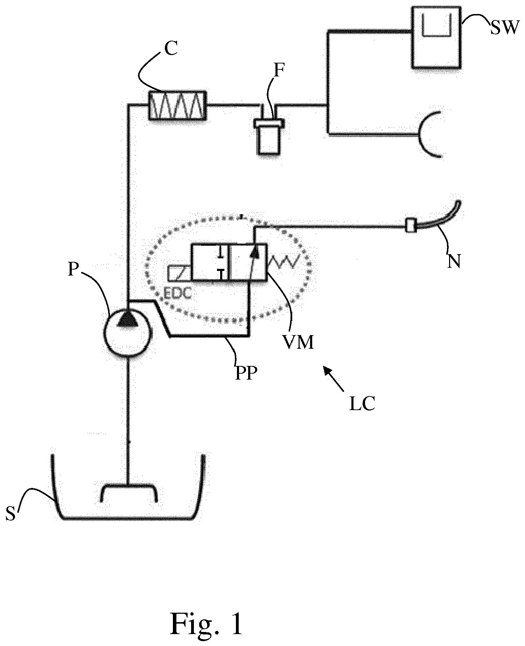

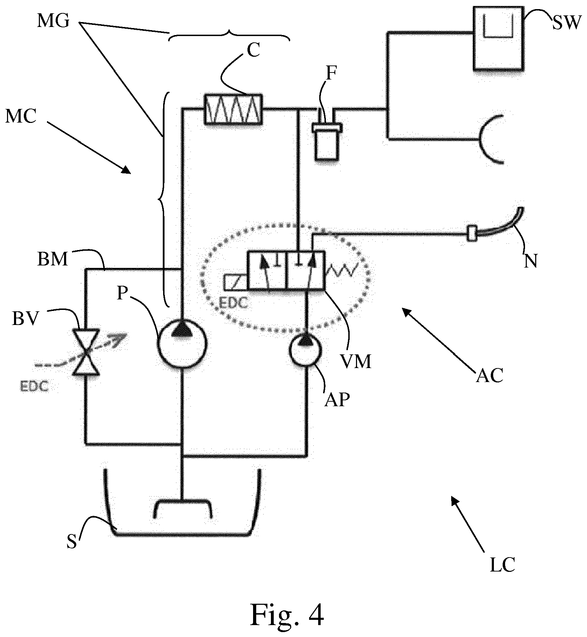

The invention will become fully clear from the following detailed description, given by way of a mere exemplifying and non-limiting example, to be read with reference to the attached drawing figures, wherein Figs. 1 - 4 show schematically preferred embodiments of the present invention, in particular, figure 4 shows a scheme with a an auxiliary oil circuit dedicated to the piston cooling a main oil circuit for the remaining engine oil consumers. The same reference numerals and letters in the figures designate the same or functionally equivalent parts. According to the present invention, the term "second element" does not imply the presence of a "first element", first, second, etc... Are used only for improving the clarity of the description and they should not be interpreted in a limiting way.

### Detailed description of the preferred embodiments

A volumetric internal combustion engine, as usual, comprises a piston reciprocated with a respective cylinder. A lubricating and cooling system is adopted either to cool the pistons or also to lubricate other "oil consumers". The piston comprises an inner cooling passage having at least an inlet and an outlet, while a piston nozzle N of the cooling system is arranged in order to hit said inlet, so as to make the oil circulating within the piston inner cooling passage.

After its work, the oil, as usual, falls in an oil sump S where the oil is collected. Alternatively, in those dry lubricating systems, the oil is immediately sucked to be stored in a separate tank, thus the oil pump sucks the oil from such oil tank instead of from the oil sump.

An internal combustion engine, not shown, comprises, as usual, inlet and exhaust valves in order to introduce a fresh charge into the cylinder and to expel exhaust gas after combustion.

The above valves are raised/lowered by actuation means AM, while switching means SW control said actuation means in order to activate, adjust and deactivate an auxiliary strategy, such as an engine brake and/or an internal EGR. Such switching means can control the inlet valve and/or the exhaust valve behaviour according to the strategy implemented.

With reference to any of the figures 1 - 3, according to the present invention a lubricating and cooling oil circuit is indicated in general with the sign LC. It comprises an oil sump S and at least one oil pump P sucking oil from said oil sump to supply two or more engine oil consumers N, SW, including at least
- said switching means SW,
- a nozzle N to produce an oil jet to cool said piston and a connection pipe PP from the nozzle and the rest of the lubricating and cooling oil circuit.

According to the present invention, the circuit LC comprises valve means VM, on/off or proportional type, on said connection pipe PP activated towards a further throttling operation, in order to increase an oil pressure within said rest of the lubricating and cooling oil circuit, when said switching means SW are activated. Preferably, said further throttling operation or said complete shut-off condition is operated at least for the time period strictly necessary to actuate said switching means.

In the following, for simplicity, said valve on the connection pipe PP is called "nozzle valve".

It is well known that the oil pump P, driven by the engine crankshaft, pressurizes a so-called "main gallery" MG and the several oil consumers are connected to said main gallery MG independently between each another (star scheme). Also according to the present invention, the pipe connection PP connects the nozzle to the main gallery, therefore, indirectly to the pump P. In this context, "the rest" of the lubricating and cooling oil circuit is clear to the skilled person in the art.

According to the figures, a cooler C is arranged on the main gallery and some consumers are connected to the main gallery through the cooler, while other consumers can be connected directly to the main gallery.

According to the figures, a filter F is arranged downstream of the cooler C and some consumers can be connected to the main gallery through the series filter-cooler, while others can be connected to the main gallery directly or through the sole cooler. Even if the piston cooling does not need the filtering of the oil being not sensible to impurities and filings, the connection pipe PP can be connected in any manner to the main gallery.

It should be note that even if the connection pipe PP is connected directly to the main gallery, namely upstream of the cooler, the cooling effects involve also the nozzle N, by considering that the whole oil fall within the common oil sump S; therefore, the cooler affects the average temperature of the oil.

According to other embodiments that can be combined with these herewith described, the cooler could be associated with the oil sump or could be series connected upstream of the oil pump P in those dry oil lubrication systems or can be associated with the oil tank of the dry oil lubrication systems. It is clear that "upstream" and "downstream" are referred to the oil circulation.

It should be considered that the nozzle for cooling the engine piston could consume till the 50% of the overall oil pumped by the oil pump P, therefore, thanks to the present invention, the pressure within the rest of the oil circuit can be suddenly increased (even doubled), by throttling/shutting-off the nozzle. This lead to a reduced sizing of the oil pump P with the appreciable consequence of fuel consumption savings.

When the switching of the command means between a normal mode to an engine brake mode or to an internal EGR mode is completed, the nozzle valve can restore a previous opening condition, by restoring the nominal oil flow towards the nozzle N.

It should be understood that the "nominal" oil flow should not be intended as a fixed value, but it should, in turn, a function of the engine load/speed condition as disclosed in US5220891.

Therefore, the increasing of throttling or the complete closing (shut off) condition of the connection pipe PP has preferably a short duration, under 1 second and approximately between 0.3 and 1 second, that is considered to be sufficient to operate the switching means SW. This short time period does not affect the overall piston temperature, whose dynamic is really slow with respect to the activation/deactivation time duration of the switching means.

It should be noted that in US2014090616 the command means are continuously variable. The present invention could be effectively combined with the teaching of US2014090616 by accompanying the continuously variable valve command means with a continuous variable throttling of the connection pipe PP by increasing the pressure in the rest of the oil circuit only when strictly needed and for the strictly needed pressure increasing.

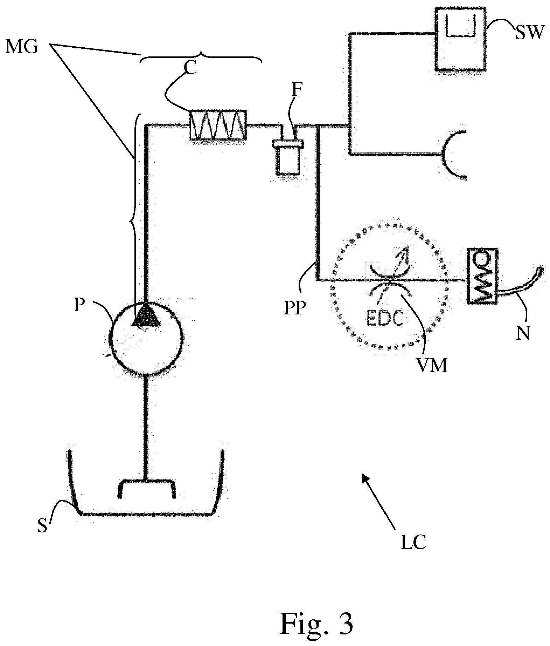

The concept of "throttling", disclosed in figure 3, highlights several degrees of opening/closing of the connection pipe operable with a proportional nozzle valve in comparison with the complete opening and closing conditions obtained by a simpler on/off nozzle valve. Therefore, according to the present invention, the shut-off or the increase of the throttling condition is function of the activation of the switching means cooperating with the command means commanding the raising/lowering at least of a cylinder valve: inlet or exhaust according to the auxiliary command strategy implemented.

It is appreciable that the nozzle valve is sufficiently fast in order to induce the required main gallery pressurization for the operation of the switching means. The implementation of a proportional nozzle valve instead of an on/off nozzle valve permits also to adjust the oil flow towards the nozzle according to the load and speed of the engine as disclosed in US5220891. However, the engine brake or the internal EGR are usually activated not coming by the maximum engine speed/load, but from a low-intermediate engine operating point. Therefore, any further throttling of the connection pipe PP does not start from a completely open condition, but from an intermediate open condition, by rendering faster the adjustment of the tightening operation, functional to the operation of the switching means SW.

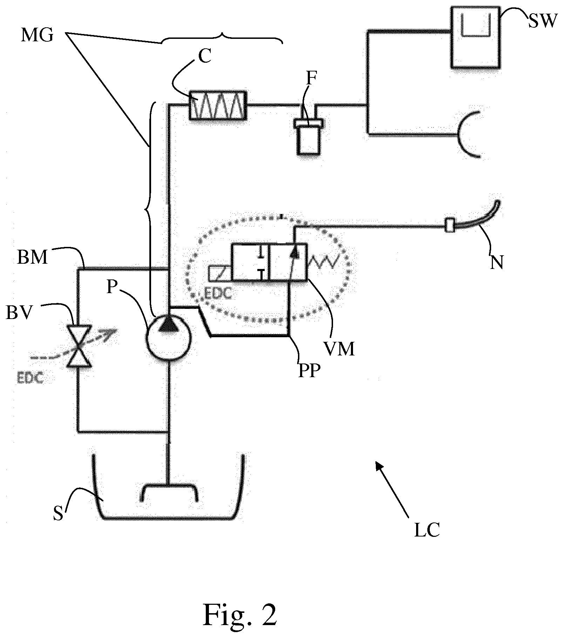

According to figure 2, the fixed oil pump P is coupled with bypass means BM connected immediately upstream and downstream of the pump P. Such bypass means comprise a second proportional valve BV that can be controlled by elaborating means EDC in order to control the amount of recirculated oil flow and indirectly to control the main gallery pressurization.

Therefore, the control means can control the nozzle valve VM and the second valve BV in coordination between each other. This embodiment comes from the merge of the schemes of figures 2 and 3.

The oil pump could also be a variable pump and, as described above can be controlled in coordination with the operation of the nozzle valve VM.

Figure 4 discloses another embodiment that can be combined with the above disclosed and shows another possibility. In particular, the nozzle N is fed of oil by an auxiliary pump AP also sucking oil form the common oil sump S or from a common oil tank, in case of dry lubrication system, preferably an electric pump, therefore not driven by the crankshaft.

An electric pump can be easily controlled, thus, the oil flow can be controlled through the auxiliary pump itself.

The pump P, that in this embodiment is the "main pump", driven by the crankshaft, can be a fixed pump alone, or a fixed pump coupled with bypass means as disclosed in figure 2 or a variable pump.

The pipe connection PP between the auxiliary pump AP and the nozzle comprises a valve VM that: in this case it is a diverting valve, namely a 3-way valve capable to alternatively connect the auxiliary pump AP with the nozzle N or with the main gallery MG of the main circuit.

Therefore, two independent circuits are achieved, a main circuit MC, where the main pump P is arranged, supplying oil to the valve command means and switching means SW and other oil consumers, and an auxiliary circuit AC, where the auxiliary pump AP is arranged, supplying oil to the piston nozzle N.

According to this embodiment, the sudden pressure increase within the main gallery MG is achieved by diverting the oil flow from the auxiliary circuit AC to the main one MC.

The interconnection between the circuits is between the nozzle valve VM and a point of the main circuit preferably upstream of the filter F.

Indeed the auxiliary circuit is preferably lacking an own filter being the piston nozzle and the piston cooling gallery not sensitive to impurities.

The auxiliary circuit can also lack an own cooler, however, for the short time period of activation of the switching means the "auxiliary oil" can be introduced into the main circuit also downstream of the main cooler C for the reasoning discussed above. Anyway, the auxiliary circuit can comprise also an own, separate cooler, or both the circuits, main and auxiliary, can share a common cooler especially if it is associated with a common oil sump S or a common oil tank for those dry oil circuits.

Preferably, the auxiliary cooler, not shown, is refreshed by the ambient air directly or indirectly through an intermediate vectoring medium. Preferably, the auxiliary cooler is a thermal exchanger between the engine oil directed to the piston nozzles and an intermediate vectoring medium circulating in a secondary circuit, where the heat is released to the ambient through the vectoring medium/ambient air exchanger. However, an indirect cooling of the oil directed to the piston nozzle is not mandatory. Therefore, in this case, the main cooler C and the auxiliary cooler, not shown, are thermally independent, so said vectoring medium of the auxiliary cooler is not the engine cooling water.

The engine oil consumers, served by the main oil circuit, can be
- crankshaft bearings CR,
- camshaft bearings (CM) and rocker arms (RA),
- engine brake organs (EB) and eventually idler gears
- air compressor bearings
- **turbocharger bearings**
- **gears**
- PTO **(Power Take Off).**

In case the auxiliary pump AP is not electric type, by driven by the engine crankshaft, the auxiliary pump is provided with bypass means connecting the pump inlet with the pump outlet through a controllable auxiliary valve, similar to the bypass valve BV described above and, also in this case, controlled by the control unit EDC.

According to another preferred embodiment that can be combined with the above ones, the auxiliary circuit comprises an auxiliary pressure sensor AP arranged between on outlet of the auxiliary pump and the piston nozzles N, and the control unit EDC, preferably the engine control unit, controls the auxiliary pump on the basis of a pressure signal generated by the auxiliary pressure sensor. According to another preferred embodiment of the invention, even combinable with the others herewith described, the control unit controls the both the pumps so that the oil fed by the auxiliary pump is proportional to the power delivered by the respective combustion engine and/or the oil fed by main pump is proportional to the engine speed/load.

Preferably, such controls are actuated by varying the target pressures within the respective main galleries of the main and auxiliary circuits.

Also the "oil diversion" from the auxiliary circuit to the main circuit is actuated for a short time when the engine brake function is activated and when the engine braking function is deactivated and in general when a transition between two or more valve operating strategy is varied, for example in order to realize an internal EGR and so on.

The time interval duration of the oil diversion depends on the dynamics of the organs involved in the operation switching.

In addition, the piston nozzles N and the auxiliary pump can be sized and controlled in order to produce a laminar oil jet. The meaning of "laminar" is well known to the skilled person in the art that knows the Reynolds numbers. Furthermore, the "laminar" concept is disclosed also in US2008017139 or in US2004040520.

If the oil jets are maintained at laminar (or near laminar) conditions, the piston inner cooling passage could be fed of fresh oil intermittently, namely, when the piston is in a proximal position with respect to the corresponding piston nozzle.

The delivery of piston cooling oil at very low oil pressure implies low pumping power, while ensuring a sufficient quantity of oil reaching the piston gallery.

Therefore, the oil flow can be reduced because independently cooled, and in addition, the oil can be ejected by the nozzle at low pressure, by obtaining at least a near laminar flow. It is well known that with the expression "near laminar flow" is intended Re<4000, while a laminar flow is characterized by Re>2300.

It is clear that, in order to maintain the oil pressure low, the nozzle inner surfaces are smooth pipes and that, accounting for the oil viscosity and density the laminar jet can be obtained by varying the nozzle opening diameter and the oil velocity, through the Reynolds formula.

For example, with an oil pressure of about 0.1 bar at the nozzle and with a nozzle outlet diameter of about 6 mm, the jet flow becomes even laminar with Re < 2130.

This means that there is minimal spray dispersion and the target, namely the piston cooling inlet opening (or bore), could be hit with a high efficiency. On the other side, this means to reduce drastically the energy needed to pump the oil.

This example, applies preferably to a 350 kW 6 cylinder engine.

In general, it is preferred to maintain the oil pressure between 0.1 and 1.5 bar with a preferred interval of 0.1 - 0.5 bar and the nozzle outlet diameters are between 4 - 8 mm.

By means of this last embodiment, a number of further advantages are achieved. A separate cooling circuit is installed for piston cooling with low pressure to minimize pumping energy. The cooling oil is at low temperature, preferably at 40° instead of the typical 90 - 100°C. This enables a further reduction of oil flow and/or reduction of oil ageing.

Many changes, modifications, variations and other uses and applications of the subject invention will become apparent to those skilled in the art after considering the specification and the accompanying drawings, which disclose preferred embodiments thereof. All such changes, modifications, variations and other uses and applications which do not depart from the scope of the invention are deemed to be covered by this invention.

It should be understood that all the single features and/or embodiments can be combined between each other. In addition, the features disclosed in the prior art background are introduced only in order to better understand the invention and not as a declaration about the existence of known prior art. Therefore, also the features described in the prior art background can be considered in combination with those mentioned in each embodiment of the detailed description.

Further implementation details will not be described, as the man skilled in the art is able to carry out the invention starting from the teaching of the above description.

## Claims

1. Lubricating and cooling oil circuit (LC) of an internal combustion engine comprising at least one cylinder/piston, inlet and exhaust valves and actuation means of the inlet and exhaust valves and switching means for controlling said actuation means in order to activate/deactivate an auxiliary valve control strategy, such as an engine brake and/or an internal EGR, the oil circuit (LC) comprising a main gallery (MG) to supply two or more engine oil consumers including said switching means (SW) and a nozzle (N) to produce an oil jet to cool said piston, wherein the oil circuit comprises a connection pipe (PP) to supply said nozzle and valve means (VM) on said connection pipe (PP) configured to increase throttling or shut-off of said connection pipe, the circuit being **characterized in that** said throttling increase or shut-off condition is maintained for a time period strictly sufficient to the operation of such switching means (SW) in controlling said actuation means, in order to increase an oil pressure within said main gallery when said switching means are activated.

2. Circuit according to claim 1, wherein control means (EDC) are configured to control said valve means (VM).

3. Circuit according to claim 1, wherein said time period is about 0.3 - 1 second.

4. Circuit according to any of previous claims, further comprising a pump (P) for sucking oil from an oil sump to pressurize said main gallery, wherein said pump (P) is a fixed pump alone, or a fixed pump coupled with relative bypass means (BM) or a variable pump and wherein said control means (EDC) are configured also to control said bypass means or said variable pump as a function of the engine speed and/or load.

5. Circuit according to any of previous claims from 1 to 4, wherein said connection pipe (PP) is connected to said main gallery (MG).

6. Circuit according to claims 4 or 5, wherein said pump (P) is hereinafter called "main pump" and the circuit further comprises an auxiliary pump (AP), independent from said main pump, feeding oil to said connection pipe (PP), by defining an "auxiliary circuit", separate and independent from said main gallery (MG), and wherein said valve means (VM) are suitable to divert oil pumped from the auxiliary pump (AP) towards said main gallery (MG) by shutting off said nozzle (N), when said switching means are activated.

7. Circuit according to claim 6, wherein
- the circuit (LC) comprises just one cooler (C) connected downstream of said main gallery and both said main pump and said auxiliary pump suck oil from said oil sump (S) or
- the circuit (LC) comprises just one cooler associated with said oil sump (S) and both said main pump and said auxiliary pump suck oil from said oil sump (S) or
- the circuit is of the dry type, comprising also an oil tank and just one cooler associated with said oil tank or arranged downstream of said oil tank and both said main pump and said auxiliary pump suck oil from said oil tank or
- the circuit comprising two oil coolers, one main cooler arranged downstream of said main pump and one auxiliary cooler arranged downstream of said auxiliary pump.

8. Circuit according to claim 7, wherein said auxiliary cooler is refreshed by the ambient air directly or indirectly through an intermediate vectoring medium.

9. Circuit according to claim 8, wherein, said vectoring medium is not the engine cooling water.

10. Circuit according to any of previous claims, wherein said engine oil consumers, supplied by the main circuit, comprise at lest one of:
- crankshaft bearings,
- actuation means: camshaft bearings and rocker arms, engine brake organs and eventually idler gears
- air compressor bearings and/or turbine bearings
- gearshift,
- PTO.
- said auxiliary pump.

11. Circuit according to any of previous claims, further comprising an oil filter (F) arranged downstream of said main gallery (MG).

12. Circuit according to claim 7, further comprising an oil filter (F) arranged downstream of said main gallery (MG) and wherein said valve means are suitable to divert oil pumped from the auxiliary pump (AP) towards said main gallery (MG) upstream of said oil filter (F).

13. Circuit according to any of the previous claims 6 - 12, wherein said auxiliary oil circuit is not provided of filtering means.

14. Circuit according to any of the previous claims 6 - 13, wherein said auxiliary pump (AP) is
- driven by the engine crankshaft and is a fixed pump alone, or a fixed pump coupled with relative auxiliary bypass means (BM) or is a variable pump or
- electric type
And wherein said control means (EDC) are configured also to control said bypass means or said auxiliary variable pump according as a function of the engine speed and/or load.

15. Combustion engine comprising a piston reciprocated with a respective cylinder, the piston comprising an inner cooling passage having at least an inlet and an outlet, the engine being provided with a lubricating and cooling oil circuit according to any of previous claims 1 to 14.

16. Vehicle provided with the combustion engine of claim 15.

## Patentansprüche

1. Schmieröl- und Kühlölkreis (LC) einer Brennkraftmaschine, der mindestens einen Zylinder/Kolben, Einlass- und Auslassventile, Betätigungsmittel der Einlass- und Auslassventile und Schaltmittel zum Steuern der Betätigungsmittel, um eine Hilfsventilsteuerstrategie wie z. B. eine Motorbremse und/oder eine interne Abgasrückführung zu aktivieren/deaktivieren, umfasst, wobei der Ölkreis (LC) eine Hauptstrecke (MG) umfasst, um zwei oder mehr Kraftmaschinenölverbraucher zu versorgen, die die Schaltmittel (SW) und eine Düse (N) zum Erzeugen eines Ölstrahls, um den Kolben zu kühlen, umfassen, wobei der Ölkreis ein Verbindungsrohr (PP), um die Düse zu versorgen, und Ventilmittel (VM) im Verbindungsrohr (PP), das konfiguriert ist, die Drosselung des Verbindungsrohres zu erhöhen oder es abzuschalten, umfasst, wobei der Kreis **dadurch gekennzeichnet ist, dass** der Zustand des Erhöhens der Drosselung oder des Abschaltens für einen Zeitraum, der für die Betätigung solcher Schaltmittel (SW) beim Steuern der Betätigungsmittel streng ausreichend ist, aufrechterhalten wird, um einen Öldruck in der Hauptstrecke zu erhöhen, wenn die Schaltmittel aktiviert sind.

2. Kreis nach Anspruch 1, wobei Steuermittel (EDC) konfiguriert sind, die Ventilmittel (VM) zu steuern.

3. Kreis nach Anspruch 1, wobei der Zeitraum etwa im Bereich von 0,3 bis 1 Sekunde liegt.

4. Kreis nach einem der vorhergehenden Ansprüche, der ferner eine Pumpe (P) umfasst, um Öl aus einem Ölsumpf zu saugen, um die Hauptstrecke mit Druck zu beaufschlagen, wobei die Pumpe (P) eine feste Pumpe allein, eine feste Pumpe, die mit relativen Umgehungsmitteln (BM) gekoppelt ist, oder eine variable Pumpe ist und die Steuermittel (EDC) außerdem konfiguriert sind, die Umgehungsmittel oder die variable Pumpe als eine Funktion der Kraftmaschinendrehzahl und/oder der Kraftmaschinenlast zu steuern.

5. Kreis nach einem der vorhergehenden Ansprüche von 1 bis 4, wobei das Verbindungsrohr (PP) mit der Hauptstrecke (MG) verbunden ist.

6. Kreis nach den Ansprüchen 4 oder 5, wobei die Pumpe (P) im Folgenden als "Hauptpumpe" bezeichnet wird, der Kreis ferner eine von der Hauptpumpe unabhängige Hilfspumpe (AP) umfasst, die dem Verbindungsrohr (PP) durch Definieren eines "Hilfskreises", der von der Hauptstrecke (MG) getrennt und unabhängig ist, Öl zuführt, und die Ventilmittel (VM) geeignet sind, Öl, das von der Hilfspumpe (AP) zur Hauptstrecke (MG) gepumpt wird, durch Abschalten der Düse (N) umzuleiten, wenn die Schaltmittel aktiviert werden.

7. Kreis nach Anspruch 6, wobei
- der Kreis (LC) lediglich einen Kühler (C), der stromabwärts von der Hauptstrecke verbunden ist, umfasst und sowohl die Hauptpumpe als auch die Hilfspumpe Öl vom Ölsumpf (S) ansaugen,
- der Kreis (LC) lediglich einen Kühler, der dem Ölsumpf (S) zugeordnet ist, umfasst und sowohl die Hauptpumpe als auch die Hilfspumpe Öl vom Ölsumpf (S) ansaugen,
- der Kreis vom trockenen Typ ist und außerdem einen Öltank und lediglich einen Kühler, der dem Öltank zugeordnet ist oder stromabwärts vom Öltank angeordnet ist, umfasst und sowohl die Hauptpumpe als auch die Hilfspumpe Öl vom Ölsumpf (S) ansaugen, oder
- der Kreis zwei Ölkühler umfasst, nämlich einen Hauptkühler, der stromabwärts von der Hauptpumpe angeordnet ist, und einen Hilfskühler, der stromabwärts von der Hilfspumpe angeordnet ist.

8. Kreis nach Anspruch 7, wobei der Hilfskühler durch die Umgebungsluft direkt oder indirekt durch ein leitendes Zwischenmedium erfrischt wird.

9. Kreis nach Anspruch 8, wobei das leitende Medium nicht das Kraftmaschinenkühlwasser ist.

10. Kreis nach einem der vorhergehenden Ansprüche, wobei die Kraftmaschinenölverbraucher, die durch den Hauptkreis versorgt werden, Folgendes umfassen:
- Kurbelwellenlager,
- Betätigungsmittel: Nockenwellenlager und Kipphebel, Kraftmaschinenbremsorgane und schließlich Laufräder,
- Luftverdichterlager und/oder Turbinenlager,
- einen Kreis,
- eine Zapfwelle und/oder
- die Hilfspumpe.

11. Kreis nach einem der vorhergehenden Ansprüche, der ferner einen Ölfilter (F) umfasst, der stromabwärts der Hauptstrecke (MG) angeordnet ist.

12. Kreis nach Anspruch 7, der ferner einen Ölfilter (F) umfasst, der stromabwärts der Hauptstrecke (MG) angeordnet ist, wobei die Ventilmittel geeignet sind, Öl, das von der Hilfspumpe (AP) zur Hauptstrecke (MG) stromaufwärts des Ölfilters (F) gepumpt wird, umzuleiten.

13. Kreis nach einem der vorhergehenden Ansprüche 6-12, wobei der Hilfsölkreis nicht von Filtermitteln bereitgestellt wird.

14. Kreis nach einem der vorhergehenden Ansprüche 6-13, wobei die Hilfspumpe (AP)
- durch die Kraftmaschinenkurbelwelle angesteuert wird und eine feste Pumpe allein, eine feste Pumpe, die mit relativen Umgehungsmitteln (BM) gekoppelt ist, oder eine variable Pumpe ist oder
- vom elektrischen Typ ist.

15. Brennkraftmaschine, die einen Kolben umfasst, der mit einem entsprechenden Zylinder hin- und herbewegt wird, wobei der Kolben einen Innenkühldurchgang, der mindestens einen Einlass und einen Auslass besitzt, umfasst und die Kraftmaschine mit einem Schmier- und Kühlölkreis nach einem der vorhergehenden Ansprüche 1 bis 14 versehen ist.

16. Fahrzeug, das mit der Brennkraftmaschine nach Anspruch 15 ausgestattet ist.

## Revendications

1. Circuit d'huile de lubrification et de refroidissement (LC) d'un moteur à combustion interne comprenant au moins un cylindre/piston, des soupapes d'entrée et d'échappement et des moyens d'actionnement des soupapes d'entrée et d'échappement et des moyens de commutation pour commander lesdites moyens d'actionnement afin d'activer/désactiver une stratégie de commande de soupape auxiliaire, telle qu'un frein moteur et/ou un EGR interne, le circuit d'huile (LC) comprenant une galerie principale (MG) pour alimenter deux, ou plus, consommateurs d'huile moteur incluant lesdits moyens de commutation (SW) et une buse (N) pour produire un jet d'huile afin de refroidir ledit piston, dans lequel le circuit d'huile comprend un tuyau de raccordement (PP) pour alimenter ladite buse et des moyens de soupape (VM) sur ledit tuyau de raccordement (PP) configurés pour augmenter l'étranglement du tuyau de raccordement ou pour couper le tuyau de raccordement, le circuit étant **caractérisé en ce que** ledit état d'augmentation d'étranglement ou de coupure est maintenu pendant une période de temps strictement suffisante au fonctionnement de tels moyens de commutation (SW) lors de la commande desdits moyens d'actionnement, afin d'augmenter une pression d'huile dans ladite galerie principale quand lesdits moyens de commutation sont activés.

2. Circuit selon la revendication 1, dans lequel des moyens de commande (EDC) sont configurés pour commander lesdits moyens de soupape (VM).

3. Circuit selon la revendication 1, dans lequel ladite période de temps est d'environ 0,3 - 1 seconde.

4. Circuit selon l'une quelconque des revendications précédentes, comprenant en outre une pompe (P) pour aspirer de l'huile depuis un carter d'huile afin de mettre sous pression ladite galerie principale, dans lequel ladite pompe (P) est une pompe fixe seule, ou une pompe fixe accouplée à des moyens de dérivation (BM) relatifs ou une pompe variable et dans lequel lesdits moyens de commande (EDC) sont configurés également pour commander lesdits moyens de dérivation ou ladite pompe variable en fonction de la charge et/ou de la vitesse de moteur.

5. Circuit selon l'une quelconque des revendications précédentes 1 à 4, dans lequel ledit tuyau de raccordement (PP) est raccordé à ladite galerie principale (MG).

6. Circuit selon les revendications 4 ou 5, dans lequel ladite pompe (P) est appelée ci-après « pompe principale » et le circuit comprend en outre une pompe auxiliaire (AP), indépendante de ladite pompe principale, apportant de l'huile audit tuyau de raccordement (PP), en définissant un « circuit auxiliaire », séparé et indépendant de ladite galerie principale (MG), et dans lequel lesdits moyens de soupape (VM) sont appropriés pour faire dévier l'huile pompée depuis la pompe auxiliaire (AP) vers ladite galerie principale (MG) en coupant ladite buse (N), quand lesdits moyens de commutation sont activés.

7. Circuit selon la revendication 6, dans lequel
- le circuit (LC) comprend un seul refroidisseur (C) raccordé en aval de ladite galerie principale et ladite pompe principale et ladite pompe auxiliaire aspirent toutes les deux de l'huile depuis ledit carter d'huile (S) ou
- le circuit (LC) comprend un seul refroidisseur associé audit carter d'huile (S) et ladite pompe principale et ladite pompe auxiliaire aspirent toutes les deux de l'huile depuis ledit carter d'huile (S) ou
- le circuit est du type sec, comprenant également un réservoir d'huile et un seul refroidisseur associé audit réservoir d'huile ou agencé en aval dudit réservoir d'huile et ladite pompe principale et ladite pompe auxiliaire aspirent toutes les deux de l'huile depuis ledit réservoir d'huile ou
- le circuit comprenant deux refroidisseurs d'huile, un refroidisseur principal agencé en aval de ladite pompe principale et un refroidisseur auxiliaire agencé en aval de ladite pompe auxiliaire.

8. Circuit selon la revendication 7, dans lequel ledit refroidisseur auxiliaire est directement ou indirectement rafraîchi par l'air ambiant par le biais d'un milieu de guidage intermédiaire.

9. Circuit selon la revendication 8, dans lequel ledit milieu de guidage n'est pas l'eau de refroidissement de moteur.

10. Circuit selon l'une quelconque des revendications précédentes, dans lequel lesdits consommateurs d'huile moteur, alimentés par le circuit principal, comprennent au moins un parmi :
- des paliers de vilebrequin,
- des moyens d'actionnement : des paliers d'arbre à cames et des culbuteurs, des organes de frein moteur et éventuellement des engrenages libres,
- des paliers de compresseur d'air et/ou des paliers de turbine,
- un levier de vitesses,
- une PTO,
- ladite pompe auxiliaire.

11. Circuit selon l'une quelconque des revendications précédentes, comprenant en outre un filtre à huile (F) agencé en aval de ladite galerie principale (MG).

12. Circuit selon la revendication 7, comprenant en outre un filtre à huile (F) agencé en aval de ladite galerie principale (MG) et dans lequel lesdits moyens de soupape sont appropriés pour faire dévier de l'huile pompée depuis la pompe auxiliaire (AP) vers ladite galerie principale (MG) en amont dudit filtre à huile (F) .

13. Circuit selon l'une quelconque des revendications 6-12, dans lequel ledit circuit d'huile auxiliaire n'est pas pourvu de moyens de filtrage.

14. Circuit selon l'une quelconque des revendications 6-13, dans lequel ladite pompe auxiliaire (AP) est
- entraînée par le vilebrequin de moteur et est une pompe fixe seule, ou une pompe fixe accouplée à des moyens de dérivation (BM) auxiliaires relatifs ou est une pompe variable ou
- de type électrique
et dans lequel lesdits moyens de commande (EDC) sont configurés également pour commander lesdits moyens de dérivation ou ladite pompe variable auxiliaire en fonction de la charge et/ou de la vitesse de moteur.

15. Moteur à combustion comprenant un piston animé d'un mouvement de va-et-vient avec un cylindre respectif, le piston comprenant un passage de refroidissement intérieur ayant au moins une entrée et une sortie, le moteur étant pourvu d'un circuit d'huile de lubrification et de refroidissement selon l'une quelconque des revendications précédentes 1 à 14.

16. Véhicule pourvu du moteur à combustion selon la revendication 15.
